# EUROPEAN PATENT APPLICATION

(11) **EP 1 355 123 A1**
(43) Date of publication of application: **22.10.2003**
(21) Application number: 03252460.5
(22) Date of filing: 17.04.2003
(51) Int. Cl.: G01B 7/30, G01D 5/22

(54) **Measuring device for detecting the angular position of a rotable object**

(30) Priority: 17.04.2002 DE 10217162
(71) Applicant: Tyco Electronics AMP GmbH, 64625 Bensheim (DE)
(72) Inventor: Hoffelder, Bernd, 67354 Roemerberg (DE); Degen, Michael, 67376 Harthausen (DE); Riedl, Gerhard, 76297 Stutensee-Friedrichstal (DE)
(74) Representative: Johnstone, Douglas Ian

(57) **Abstract**

A measuring device (10) for detecting the angular position of a rotatable object comprising a magnet core (16), a first coil (14), second coils (20, 22), a permanent magnet (12), and an evaluation circuit. The magnet core (16) has an annular shape and is provided with a gap (24). The first coil (14) is wound about the magnet core (16) and generates a magnetic flow in the magnet core (16). The second coils (20, 22) are wound about ends of the first coil proximate the gap (24). The permanent magnet (12) has a first side moveably attached to the magnet core (16) and a second side for attaching to the rotatable object. The permanent magnet (12) is attached to the magnet core (16) such that a virtual gap is formed in the magnet core (16) during movement thereof. The evaluation circuit detects the position of the permanent magnet (12) based on the voltages induced in the second coils (20, 22) by the magnetic flow.

## Description

The present invention relates to a measuring device for detecting the angular position of a rotatable object.

A rotary potentiometer is typically used to detect the angular position of a throttle valve of an internal-combustion engine or other rotatable object. The rotary potentiometer has an axis of rotation connected to an axis of rotation of the rotatable object. A voltage measured by the rotary potentiometer is directly proportional to an angular position of the rotatable object.
The use of a rotary potentiometer for detecting the angular position of the rotatable object has the drawback that friction occurs during the actuation of the rotary potentiometer, which can impede the rotation of the rotatable object. With frequent actuation the friction also causes wear on the rotary potentiometer, which may cause the rotary potentiometer to stop working completely.

Another common method for detecting the angular position of the rotatable object is by the use of a measuring device, which detects the position of a permanent magnet, connected to the rotatable object. Sensors, such as Hall sensors or anisotropic magneto resistance (AMR) sensors, are used to determine the position of the permanent magnet. Measuring devices of this type are contactless measuring devices, which do not have the same drawbacks as the rotary potentiometers. The use of such measuring devices, however, has a disadvantage in that the evaluation of the sensor signals is very expensive. A non-linear connection exists between the sensor signals and the angular position of the rotatable object. Moreover, this type of detection of the angular position can only be used with certain assumptions. It cannot be used, or only with great expense, when the rotatable object is a hollow shaft.

It is therefore desirable to develop a measuring device for detecting the angular position of a rotatable object, which is free of wear and operates in a reactionless manner, and is simple to produce and operate.

The invention relates to a measuring device and method for detecting the angular position of a rotatable object. The measuring device has a magnet core, a first coil, second coils, a permanent magnet, and an evaluation circuit. The magnet core has an annular shape and is provided with a gap. The first coil is wound about the magnet core and generates a magnetic flow in the magnet core. The second coils are wound about ends of the first coil proximate the gap. The permanent magnet has a first side moveably attached to the magnet core and a second side for attaching to the rotatable object. The permanent magnet is attached to the magnet core such that a virtual gap is formed in the magnet core during movement thereof. The evaluation circuit detects the position of the permanent magnet based on the voltages induced in the second coils by the magnetic flow.

An illustrative embodiment of the invention will be described herein and shown in the drawing, in which:

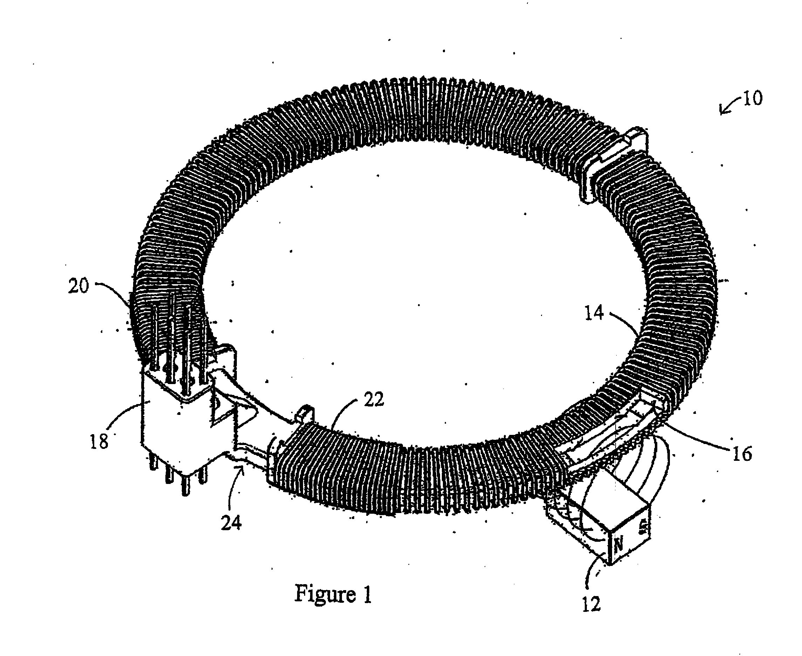

Figure 1 is a perspective view of a measuring device.

The individual elements and the operation of the measuring device will be described in greater detail herein. Figure 1 shows a measuring device 10. The measuring device 10 has a magnet core 16, a first coil 14, two second coils 22 and 20, a permanent magnet 12, a plug connector 18 and an evaluation circuit (not shown).

The magnet core 16 is an annularly formed strip made of soft magnetic crystalline, amorphous or nanocrystalline material. For example, a nickel/iron strip or amorphous metal foils arranged one above the other are suitable as materials for producing the magnet core 16. One or more layers made of amorphous or nanocrystalline material applied to a crystalline material may also be used for producing the magnet core 16. The measuring device is thus insensitive, or less sensitive, to constant magnetic fields generated outside the measuring device so that the magnet core 16 cannot be brought to saturation, or at least not as quickly, by external magnetic fields. The magnet core 16 is formed in the shape of a ring. The ring is not closed, but has a gap 24 that is a few millimetres in width. The gap may be, for example, 5 mm in width. The gap 24 may be located at the position where the plug-in connector 18 is arranged, as shown in Figure 1.

The evaluation circuit (not shown) is arranged in the gap 24. The evaluation circuit (not shown) is connected to the first coil 14 and the second coils 20 and 22 via the plug connector 18 to an external control device (not shown).

The first coil 14 is wound about the magnet core 16. The first coil 14 extends over the entire length of the magnet core 16. A first end of the first coil 14 has one of the second coils 22 wound thereabout. A second end of the first coil 14 has the other second coil 20 wound thereabout.

The permanent magnet 12 is arranged below the first coil 14 and the second coils 20 and 22. The permanent magnet 12 is arranged so that the first coil 14 and the second coils 20 and 22 and the permanent magnet 12 do not contact each other. The permanent magnet may alternatively be arranged above the first coil 14 and the second coils 20 and 22.
The operation of the measuring device 10 will now be described in greater detail. The permanent magnet 12 is connected to a rotatable object (not shown) from which the angular position is to be detected. The permanent magnet 12 is moved along the magnet core 16 during rotation of the rotatable object. An alternating current is impressed into the first coil 14 by the evaluation circuit (not shown). The alternating current is preferably constant and does not depend on the position of the permanent magnet 12. The frequency of the alternating current may be, for example, 3 kHz. The frequency of the alternating current may also be of a larger or smaller value. The alternating current flowing through the first coil 14 causes a magnetic flow to form in the magnet core 16.

The magnetic flow causes voltages to be induced in the second coils 20 and 22. The voltages induced in the second coils 20 and 22 may be of a different size. The size of the voltages will depend on the position of the permanent magnet 12, among other factors. The dependencies of the voltages on the position of the permanent magnet 12 occur because the permanent magnet 12 causes a division of the magnet core 16 into two parts in which magnetic flows of different sizes may be established that then cause the induction of voltages of different sizes in the second coils 20 and 22. More precisely, the permanent magnet 12 brings the part of the magnet core 16 that is remote from the permanent magnet 12 to saturation, so a virtual gap is produced in the magnet core 16. The virtual gap divides the magnet core 16 into two parts. The parts include a first magnetic core part extending between the permanent magnet 12 and the end of the magnet core 16 carrying the second coil 22, and a second magnet core part extending between the permanent magnet 12 and the end of the magnet core 16 carrying the second coil 20. Magnetic flows of different sizes can form in the two magnet core parts. The magnetic flow generated in the first magnet core part is generated by the part of the first coil 14 wound around the first magnet core part. The magnetic flow generated in the second magnet core part is generated by the part of the first coil 14 wound around the second magnet core part. The size of the magnetic flows formed in the first magnet core part and in the second magnet core part, depends on the length of the respective magnet core parts and, more precisely, on the number of windings of the first coil 14 around the first magnet core part and the second magnet core part.

The magnetic flows of different sizes in the magnet core parts result in the induction of voltages of different sizes in the second coils 20 and 22. The voltage induced in the second coil 20 depends on the magnetic flow being established in the first magnet core part. The voltage induced in the second coil 22 depends on the magnetic flow being established in the second magnet core part. The voltage induced in the second coil 20 is, therefore, directly proportional to the magnetic flow established in the first magnet core part. The magnetic flow established in the first magnet core part is directly proportional to a length of the first magnet core part and, more precisely, to the number of windings of the first coil 14 around the first magnet core part. The voltage induced in the second coil 22 is directly proportional to the magnetic flow established in the second magnet core part. The magnetic flow established in the second magnet core part is directly proportional to a length of the second magnet core part and, more precisely, to the number of windings of the first coil 14 around the second magnet core part.

The voltages induced in the second coils 20 and 22 are supplied to the evaluation circuit (not shown). The evaluation circuit (not shown) can quickly and simply determine from the voltages induced in the second coils 20 and 22 at what point the permanent magnet 12 is located. This is preferably determined by the evaluation of the difference in the voltages induced in the second coils 20 and 22. The difference in the voltages may be evaluated in precisely the same manner as the voltage measured by a rotary potentiometer actuated by the rotatable object. When the evaluation circuit evaluates the difference in the voltages induced in the second coils 20 and 22, it is advantageous if the second coils 20 and 22 are connected in series so that the voltages induced therein are in opposite directions. The differential voltage may then be immediately measured at the connections of the second coils 20 and 22, which are not connected to one another, and can be transmitted to the evaluation circuit.

The measuring device 10 described herein serves to detect the angular position of a throttle valve of an internal-combustion engine. However, it can also be used to detect the angular position of any other rotatable object.

The measuring device 10 is relatively insensitive to external magnetic fields, which eliminates the influence of external magnetic fields on the magnetic flow so that the difference in the voltages induced in the second coils 20 and 22 may be evaluated. Screening of the measuring device 10, therefore, is only necessary when there are strong external magnetic fields that saturate the magnetic core 16. The screening may be performed by placing a screening dish on the measuring device 10. The measuring device 10 is also relatively insensitive to tolerances during production. In particular, it is permissible for the spacing between the magnet core 16 and the permanent magnets 12 to deviate and/or vary from the ideal spacing. The measuring device 10 is thereby significantly superior to conventional measuring devices for detecting the angular position of a rotatable object, because it operates free of wear and in a reactionless manner while being easy to produce and operate.

## Claims

1. A measuring device (10) for detecting the angular position of a rotatable object, **characterized in that** the measuring device comprises:
a magnet core (16) having an annular shape and provided with a gap (24);
a first coil (14) wound about the magnet core (16) for generating a magnetic flow in the magnet core (16);
second coils (20, 22) wound about ends of the first coil (14) proximate the gap (24);
a permanent magnet (12) having a first side moveably attached to the magnet core (16) and a second side for attaching to the rotatable object, the permanent magnet (12) is attached to the magnet core (16) such that a virtual gap is formed in the magnet core (16) during movement thereof; and
an evaluation circuit for detecting the position of the permanent magnet (12) based on voltages induced in the second coils (20, 22) by the magnetic flow.

2. The measuring device (10) of claim 1, wherein the magnet core (16) includes a soft crystalline material.

3. The measuring device (10) of claim 2, wherein the crystalline material includes at least one layer of an amorphous or nanocrystalline material applied thereto.

4. The measuring device (10) of any preceding claim wherein the magnet core (16) includes a nickel/iron strip.

5. The measuring device (10) of any preceding claim, wherein the magnet core (16) includes a nanocrystalline material.

6. The measuring device (10) of any preceding claim, wherein the magnet core (16) includes an amorphous material.

7. The measuring device (10) of any preceding claim, wherein the magnet core (16) includes at least one layer of an amorphous metal foil.

8. The measuring device (10) of any preceding claim, wherein the first coil (14) is wound about the entire length of the magnet core (16).

9. The measuring device (10) of any preceding claim, wherein the permanent magnet (12) is arranged below the magnet core (16).

10. The measuring device (10) of any preceding claim, wherein the second coils (20, 22) are connected in series.
